**Europäisches Patentamt**

**European Patent Office**

**Office européen des brevets**

(19)

(11) Veröffentlichungsnummer: **0 206 234 B1**

(12) **EUROPÄISCHE PATENTSCHRIFT**

(45) Veröffentlichungstag der Patentschrift:
25.04.90

(21) Anmeldenummer: **86108287.3**

(22) Anmeldetag: **18.06.86**

(51) Int. Cl.⁴: **H01B 7/28**, G02B 6/44,
C10M 125/26, C10M 119/02,
C10M 133/00

(54) Kabelfüllmassen.

(30) Priorität: 26.06.85 DE 3522751

(43) Veröffentlichungstag der Anmeldung:
30.12.86 Patentblatt 86/52

(45) Bekanntmachung des Hinweises auf die Patenterteilung:
25.04.90 Patentblatt 90/17

(84) Benannte Vertragsstaaten:
AT BE CH DE FR GB IT LI LU NL SE

(56) Entgegenhaltungen:
CH-A- 586 453
DE-A- 3 150 909
GB-A- 1 448 617
GB-A- 2 100 281
US-A- 4 366 075

(73) Patentinhaber: Henkel Kommanditgesellschaft auf
Aktien, Postfach 1100 Henkelstrasse 67,
D-4000 Düsseldorf-Holthausen(DE)

(72) Erfinder: Wichelhaus, Jürgen, Dr., Egenstrasse 60,
D-5600 Wuppertal 1(DE)
Erfinder: Andres, Johannes, Bonner Strasse 14,
D-4000 Düsseldorf(DE)
Erfinder: Gruber, Werner, Dr., Franz-Kremer-Strasse 7,
D-4052 Korschenbroich 1(DE)

## Beschreibung

Die Erfindung betrifft Füllmassen oder Dichtstoffe für elektrische Bauteile wie Kabel, Lichtwellenleiter, Leisten oder Stecker. Die Füllmassen bestehen aus einer Polymer-Lösung, in der hochdisperse Kieselsäure und gewünschtenfalls Hohlkörper dispergiert sind. Sie schützen Kabel oder Lichtwellenleiter gegen das Eindringen von Verunreinigungen, insbesondere Wasser, wie bedingt auch vor mechanischen Beschädigungen beim Verlegen oder aufgrund von Temperaturbeanspruchungen.

Bei Nachrichtenkabel wie auch bei Lichtwellenleitern besteht bekanntlich die Gefahr, daß die an einer Stelle eindringende Feuchtigkeit sich axial ausbreitet und dann zum einen die Leistungsfähigkeit der Leitung herabsetzt, zum andern korrosiv wirkt. Man hat in der Vergangenheit bereits zahlreiche Versuche unternommen hiergegen geeignete Dichtmittel bereitzustellen. So wird beispielsweise in der DE-OS 3 150 909 eine Füllsubstanz beschrieben, die aus einem viskosen, nicht Wasser mischbaren Stoff und darin fein dispergierten elastischen Hohlkörpern besteht, wobei die Hohlkörper so geartet sind, daß sie unter dem Einfluß größerer Kräfte auf ein kleineres Volumen zusammengedrückt werden können und hernach beim Nachlassen dieser Kräfte ihr ursprüngliches Volumen wieder einnehmen.

Wenngleich derartige Füllmassen aufgrund der relativ geringen Dielektrizitätskonstanten eine Reihe von Vorteilen bieten, so besteht bei höheren Betriebstemperaturen die Gefahr, daß die Füllsubstanz aus Beschädigungen des Kabelmantels ausläuft oder daß zumindest Öl wegschlägt. Man kann diesen Effekten bis zu einem gewissen Grad begegnen, indem man den Anteil der elastischen Hohlkörper so groß wählt, daß die Massen nur unter Druck, d.h. dann wenn die elastischen Hohlkörper auf ein kleineres Volumen komprimiert sind, fließen können. Auf diesem Wege lassen sich Kabel mit etwas besseren Eigenschaften herstellen, doch ist die Arbeitsweise aufgrund der hohen Drucke beim Eingeben der Füllsubstanz umständlich.

Zur Verbesserung der Wärmestandfestigkeit der Füllsubstanzen nach der DE-C 3 150 909 wurde bereits versucht die Kugeln durch Vernetzung zu stabilisieren. So wird in der DE-A 3 213 783 vorgeschlagen, die Kugeln durch Elektronenstrahlbehandlung zu vernetzen. Wenngleich dadurch die Stabilitätsgrenze der Hohlkörperchen um ca. 10°C erhöht wird, so sind die so behandelten Füllsubstanzen dennoch nur sehr begrenzt thermisch belastbar.

In der britischen Patentanmeldung 2 100 281 wird eine Kabelreparatur und Abzweigmasse beansprucht, die aus einem Mineralöl und einem hydrophobierten Silikat besteht. Als weitere Komponenten können mikrokristalline Wachse, Glaswollkugeln und fakultativ polymere Verdickungsmittel mitverwendet werden. Als Verdickungsmittel wird hier ein niedermolekularer depolymerisierter Butylgummi eingesetzt. Die hier beschriebenen Massen sind jedoch nicht als Füllsubstanzen für Kabel oder Lichtwellenleiter geeignet, die bei Betriebstemperaturen von mehr als 80°C betrieben werden sollen und bei extrem tiefen Temperaturen nicht brechen dürfen.

Es besteht daher ein Bedarf nach Füllsubstanzen für Kabel oder Lichtwellenleiter, die auch bei Betriebstemperaturen von 80°C, 120°C oder sogar 150°C oder kurz darüber nicht aus beschädigten Stellen eines Kabels auslaufen können und die über den gesamten für den praktischen Betrieb wichtigen Temperaturbereich ein plastisches Fließverhalten zeigen, worunter zu verstehen ist, daß die Füllsubstanzen bis zu einer durch Eigengewicht ausgelösten Scherspannung nicht fließen können. Gleichwohl sollen die Füllsubstanzen die günstigen Eigenschaften der bekannten hohlkörperhaltigen Massen, insbesondere ihre Dielektrizitätskonstanten von vorzugsweise unter 2,0 aufweisen. Schließlich sollen die Massen unter den bei der Kabelfertigung üblichen Bedingungen verarbeitbar sein.

Aufgabe der Erfindung ist es, Füllsubstanzen mit einem derartigen Eigenschaftsbild bereitzustellen.

Gegenstand der Erfindung sind somit Füllsubstanzen zum Längsdichten elektrischer und/oder optischer Kabel und Leisten auf Basis einer unpolaren, nicht wasser-mischbaren organischen Flüssigkomponente und gegebenenfalls von gasgefüllten Mikrohohlkörpern, die in einem bei Raumtemperatur flüssigen Kohlenwasserstoff gelöst

- ein organisches Verdickungsmittel auf Basis eines Polymeren und gewünschtenfalls
- ein Dispergiermittel enthält, wobei in dieser Lösung dispergiert sind:
- hochdisperse Kieselsäure und gewünschtenfalls
- gasgefüllte Mikrohohlkörper eines Durchmessers von 5–500 μm,

dadurch gekennzeichnet, daß als organisches Verdickungsmittel 2 bis 25 Gew.-% eines Copolymeren aus Propen und Buten eingesetzt wird, welches auch noch Ethen enthalten kann, wobei die Volumenteile der dispergierten Stoffe 10 bis 80 Volumen-% betragen und die Füllsubstanz ein plastisches Fließverhalten zeigt.

In einer allgemeinen Ausführungsform betrifft die Erfindung Füllsubstanzen auf Basis einer unpolaren, mit Wasser nicht mischbaren Flüssigkeit, die durch ein organischen Polymeres angedickt ist und dabei ein plastisches Fließverhalten zeigt und die zur Erreichung einer niederen Dielektrizitätskonstante Mikrohohlkörper enthalten. Dabei wird zur zusätzlichen Auslaufsicherung eine hochdisperse Kieselsäure eingebracht, die die Hohlkörperchen stabilisiert und ein Abgleiten aneinander verhindert. Weiterhin kann ein Polykondensationsprodukt mit hydrophoben Bereich und hydrophilen Bereichen wie Aminoendgruppen vorhanden sein, welches nach Art eines Dispergators, die polareren Hohlkörperchen und die Kieselsäureteile in dem wenig polaren Medium verteilt und stabilisiert.

Die erfindungsgemäßen Füllsubstanzen erhalten somit als wichtige Komponente einen flüssigen Kohlenwasserstoff. Die Menge an Kohlenwasserstoff beträgt im allgemeinen 65–90 Gew.-%, vorzugsweise 75–88 Gew.-%. In Einzelfällen, insbesondere bei höherem Anteil an Hohlkugeln oder disperser Kieselsäure, sind auch Kohlenwasserstoffmengen zwischen 50 und 65 Gew.-% ausreichend. Geeignete unpolare Kohlenwasserstoffe sind in erster Linie Mineralöle. Unter diesen werden Substanzen bevorzugt, die einen Stockpunkt kleiner 0°C aufweisen. Bei Substanzen mit höherem Stockpunkt empfiehlt sich die Mitverwendung von üblichen Stockpunkterniedrigern. Die Dichte der unpolaren Kohlenwasserstoffe soll zwischen 0,8 und 0,95 g/l liegen, vorzugsweise zwischen 0,81 und 0,91. Ein wichtiges Auswahlkriterium ist dabei die kinematische Viskosität. Diese soll bei 20°C, gemessen zwischen 2 und 600 cSt $(mm^2 \cdot s^{-1})$ liegen. Bevorzugt sind unpolare Kohlenwasserstoffe, insbesondere Mineralöle mit einer kinematischen Viskosität zwischen 15 und 300 cSt und insbesondere 50 bis 250 cSt, besonders vorteilhaft ist die Verwendung entparaffinierter Naphthenöle mit Kennzahlen im oben definierten Bereich.

Eine weitere wichtige Komponente der erfindungsgemäßen Füllsubstanzen sind die organischen Verdickungsmittel. Als organisches Verdickungsmittel kommen Polymere auf Basis Propen, Buten und gewünschtenfalls Ethen in Frage, die in den unpolaren Kohlenwasserstoffen löslich sind und deren Lösungen spezielle rheologische Eigenschaften, nämlich plastisches Fließverhalten, aufweisen. Insbesondere sollen deren Lösungen entweder als solche oder nach Zugabe der weiteren Komponenten der Füllsubstanzen ein plastisches Fließverhalten haben, wobei die Viskosität der Lösungen im Temperaturbereich bis etwa 100° bei steigender Temperatur nicht oder nicht wesentlich abnimmt.

Besonders geeignet sind alpha-Olefincopolymere, die im Niederdruck-Polymerisationsverfahren mit Hilfe von Ziegler-Natta Katalysatoren hergestellt worden sind. So sind beispielsweise Copolymere aus Ethylen und Propylen, aus Ethylen und alpha-Butylen geeignet. Auch Terpolymere, die als Hauptbestandteil mindestens eines der genannten Olefine enthalten, können eingesetzt werden. Dem auf diesem Gebiet tätigen Fachmann ist bekannt, daß sich die Eigenschaften von alpha-Olefincopolymeren durch Wahl des Katalysators und der Polymerisationstemperatur sowie des Einsatzverhältnisses der Monomeren variieren lassen. Oftmals resultieren jedoch auch bei unterschiedlichen Voraussetzungen Materialien, die hinsichtlich ihrer Endeigenschaften nahezu gleich sind. Für die vorliegende Erfindung sind alpha-Olefincopolymere besonders bevorzugt, die eine Schmelzviskosität zwischen 30 und 70 Pas nach Brookfield bei 190°C aufweisen, insbesondere zwischen 40 und 60 Pas. Dabei ist es günstig, wenn der Erweichungspunkt zwischen 90 und 160°C, insbesondere zwischen 100 und 125°C liegt und die Dichte 0,83–0,9 g/ccm beträgt.

Eine besonders bevorzugte Klasse sind Copolymere aus Propylen und alpha-Butylen mit einem C3-Anteil zwischen 55 und 90%, insbesondere zwischen 60 und 85 Gew.-%. Derartige Copolymere können weiterhin 2–10 und insbesondere 2–5 Gew.-% Ethen gebunden enthalten. Unter den letztgenannten alpha-Olefincopolymeren können coisotaktische Produkte bevorzugt sein.

Die erfindungsgemäßen Füllsubstanzen enthalten als weiteren Bestandteil 2–10 Gew.-%, vorzugsweise 3–7 Gew.-% hochdisperse Kieselsäure. Unter hochdisperser Kieselsäure wird hier in erster Linie pyrogene Kieselsäure verstanden, obwohl auch andere hochdisperse Kieselsäuren eingesetzt werden können. Bevorzugt sind hier hochdisperse Kieselsäure mit einer Teilchengröße zwischen 0,007 und 0,05 micron und einem Schüttgewicht zwischen 20 und 120 g/l. So können insbesondere Kieselsäure mit einem Schüttgewicht zwischen 35 und 40 g/l und einer Teilchengröße zwischen 0,007 und 0,014 micron eingesetzt werden.

Als weiteren Bestandteil können die erfindungsgemäßen Füllsubstanzen 0,2–10 Gew.-%, vorzugsweise 0,5–5 Gew.-%, Mikrohohlkörper enthalten. Unter den denkbaren Mikrohohlkörper sind Mikrohohlkugeln bevorzugt. Verwendet werden können hier Mikrohohlkugeln zum einen aus anorganischen Materialien, wie beispielsweise Glashohlkugeln insbesondere aus Silikatgläsern, zum anderen auch organische Mikrohohlkugeln mit elastischen Wänden. Die Hohlkugeln sollen einen Durchmesser zwischen 10 und 150 μm und insbesondere zwischen 40 und 60 μm aufweisen.

Es ist bevorzugt hier besonders leichte Stoffe einzusetzen, deren Schüttgewicht unter 100 kg/m³ und insbesondere unter 50 kg/m³ liegt. Neben den erwähnten anorganischen Mikrohohlkugeln sind insbesondere organische Mikrohohlkugeln bevorzugt. So können mit Erfolg Mikrohohlkugeln auf Basis eines Copolymeren aus Acrylnitril und Vinylidenchlorid eingesetzt werden. Hier sind beispielsweise Produkte mit einem Durchmesser von 40–60 μm im Handel und geeignet. Verwendet werden können beispielsweise Mikrohohlkugeln auf Basis Acrylnitrilvinylidenchlorid, die mit einem Inertgas wie Isobutan gefüllt sind. Gewünschtenfalls können hier Hohlkugeln eingesetzt werden, deren Wände durch die Verwendung mehrfunktioneller Monomerer vernetzt sind oder die nachträglich durch ionisierende Strahlen vernetzt worden sind. Der Fachmann hat in jedem Falle die Menge an Hohlkugeln so zu bemessen, daß die Kugeln innerhalb der fertigen Füllsubstanz unter Normaldruck eine geringere Raumerfüllung als dichteste Kugelpackung aufweisen. Die Kugelmenge soll daher in der fertigen Füllsubstanz, vorzugsweise unter 70 Volumen-% und insbesondere unter 50 Volumen-% liegen, da sonst ein Befüllen der Kabelmäntel mit der Füllsubstanz nur unter Komprimierung der Teilchen durch hohen Druck möglich ist.

Die erfindungsgemäßen Füllsubstanzen können weiterhin Dispergiermittel enthalten. Als Dispergiermittel eignen sich hier Polykondensate, insbesondere Polykondensate auf Basis hydrophober und hydrophiler Komponenten. So können Polykondensate eingesetzt werden, die wenigstens zum Teil aus Dimerfettsäuren oder den dazu korrespondierenden Diaminen aufgebaut sind. Geeignete Kondensate sind Polyamide aus Dimerfettsäuren und Diaminen oder Polyester aus Dimerfettsäuren und mehrfunktionellen Alkoholen (Funktionalität 2 oder 3). Auch Mischtypen können eingesetzt werden. Bevorzugt sind Polykondensate mit endständigen Aminogruppen. So sind beispielsweise Polykondensate aus einer langkettigen Dicarbonsäure mit einem oder mehreren Diaminen oder Triaminen, insbesondere Kondensationsprodukte von Dimerfettsäuren, Trimerfettsäuren, monomeren Fettsäuren und primären oder sekundären Diaminen mit 2–36 Kohlenstoffatomen (Dimerfettamin) geeignet. Auch Polykondensate von Dicarbonsäuren mit cyclischen Aminen, wie Piperazin, können eingesetzt werden. Im geringen Maße können die Dimerfettsäuren auch durch kurzkettige Dicarbonsäuren, beispielsweise Sebacinsäure oder Adipinsäure ersetzt sein. Häufig ist es bevorzugt, wenn die Polykondensate endständige Aminogruppen aufweisen. Günstig sind Aminzahlen zwischen 80 und 400, insbesondere zwischen 190 und 230. So hat beispielsweise ein bevorzugtes Material diese Kennzahlen und darüber hinaus eine Viskosität von 0,3–4 Pas bei 75°C, andere geeignete Produkte zeigen eine Viskosität von 0,7–1,2 Pas bei 150°C. Gewünschtenfalls können die oligomeren Dispergatoren auch durch Fettsäureester und/oder Fettalkoholether ganz oder teilweise ersetzt werden.

Als weitere Bestandteile können die erfindungsgemäßen Füllsubstanzen noch in derartigen Zubereitungen üblichen Hilfsstoffe enthalten. So können beispielsweise Antioxidationsmittel, Farbstoffe oder auch Korrosionsinhibitoren miteingesetzt werden.

Die erfindungsgemäßen Füllsubstanzen eignen sich dazu elektrische Bauteile der verschiedensten Art wie beispielsweise Kabel, Stecker, Leisten, Kommunikationskabel oder auch Lichtwellenleiter gegen das Eindringen von Verunreinigungen und insbesondere Feuchtigkeit zu schützen. Die Füllsubstanzen und zwar insbesondere wenn sie organische Hohlkörper enthalten, eignen sich weiterhin zum Schutz von Lichtwellenleitern aus Glas gegen mechanische Schädigung, wie sie beim Verlegen durch Biegen und Temperaturbeanspruchung auftreten kann. Darüber hinaus können die erfindungsgemäßen Füllsubstanzen auch als Reparaturdichtstoffe eingesetzt werden, etwa wenn elektrische Leitungen oder Bauteile im Rahmen von Verlegerarbeiten entisoliert oder beschädigt worden sind.

Die Füllsubstanzen zeigen eine Fülle hervorragender technischer Eigenschaften. So ist der Isolationswiderstand hoch und der spezifische Volumenwiderstandsfaktor groß. Aufgrund der Hohlkugeln ist weiterhin die Dielektrizitätskonstante niedrig, d.h. es können je nach Hohlkugelmengen Werte unter 2,3 und insbesondere auch unter 2 eingestellt werden. Das spezifische Gewicht bevorzugter Füllmassen ist kleiner als 1. Sie sind mit den verschiedensten Kunststoffen, die im Bereich elektrischer Bauteile und Kabel verwendet werden, verträglich. So dringen die Bestandteile der Füllmassen nicht in derartige Kunststoffe ein und auch die gängigen Kabelmantelmaterialien werden nicht verändert. Die Füllmassen sind bis zu Temperaturen von 90°C absolut stabil und werden nicht dünnflüssig, auch bei Beschädigungen bei diesen Temperaturen tritt kein Auslaufen auf. Weiterhin sind die Füllmassen flexibel, die Flexibilität bleibt bei Temperaturen bis zu minus 40° erhalten, ohne daß sich die rheologischen Eigenschaften drastisch verändern und ohne daß bei tiefen Temperaturen bei Beanspruchung Risse auftreten. Darüber hinaus sind die Füllsubstanzen nach der Erfindung leicht verarbeitbar, d.h. bereits bei Temperaturen unterhalb von 70°C können sie mit mäßigem Druck in die zu befüllenden Kabelmäntel eingelassen werden, wobei selbst schwer zugängliche Stellen erreicht werden.

Beispiele

Bei den nachfolgend beschriebenen Beispielen wurden folgende Komponenten eingesetzt:

A bei Raumtemperatur flüssiges Mineralöl mit den Analysendaten:
Dichte bei 15°C nach ASTM D 941: 0,886
Viskosität bei 20°C in cst nach ASTM D 445: 242
Stockpunkt in °C nach ASTM D 97: –9
B Propylen-alpha-butylen-Copolymer, das zur Verminderung von Kristallinität zwischen 2 und 5% Ethylen-Einheiten als zusätzliches Comonomer enthält, gekennzeichnet durch:
Schmelzviskosität von 50.000 mPa · s bei 190°C nach Brookfield
Erweichungspunkt (R+B) nach DIN 52011: 107–110°C
Dichte bei 23°C nach DIN 53479: 0,87
Reißdehnung nach DIN 53455, Prüfstab 4: ca. 1.250
C Hochdisperse Kieselsäure
Durchschnittliche Teilchengröße in Mikron 0,007
Schüttgewicht: ca. 40 g/l
D Mikrohohlkügelchen aus Acrylnitril-Vinylidenchlorid-Copolymer
Teilchengröße: 40–60 μm
gefüllt mit Isobutan.
Handelsname Expancel DE von Kema Nobel Nord
E Oligoamid
hergestellt durch Kondensation von Dimerfettsäure mit Ethylendiamin; Kenndaten:

4

Aminzahl: 190–230
Viskosität nach Brookfield 35 Poise bei 75°C.

Alle Angaben in den folgenden Beispielen sind in Gewichtsteilen angegeben.

Die Beispiele enthalten alle bis zu 2 Gew.-% Antioxidantien, d.h. Gemische aus Irganox® 1035, 1010 und 1024 und Triphenylphosphin. Der Zusatz von Antioxidantien wird in den Beispielen nicht extra aufgeführt. Die Angaben der Gewichtsteile beziehen sich dabei auf 100 ohne Berücksichtigung der Antioxidantien-Bestandteile.

Für die Herstellung der Füllmassen sind alle effektiven aber schonend arbeitenden Mischaggregate geeignet, die eine wirksame Durchmischung auch bei geringer Umdrehungszahl ermöglichen, z.B. Turbulentmischer und ähnliches.

Der Eintrag der Massen in ein normales Telefonkabel wurde mit einer konventionellen Faßschmelzanlage ausprobiert. Die Massen der Beispiele 1 und 2 wurden bei 60°C gefördert; alle anderen Beispiele, die die Erfindung beschreiben, ließen sich bei Raumtemperatur problemlos fördern, ohne daß ein Reißen oder Lufteinschlüsse beim Fördern beobachtet wurden. Dagegen trat bei den Massen der Vergleichsbeispiele unter gleichen Förderungsbedingungen ein Abreißen der Masse auf.

Die Produkte wurden bei 12 bar N₂-Überdruck über mehrere Stunden getestet. Dabei trat keine Zerstörung der Materialien auf. Der Volumenschwund bei den Mikrohohlkügelchen enthaltenden Massen war kleiner 1%.

Beispiel 1

15 Teile des alpha-Olefincopolymers (B) wurden bei 130°C unter Rühren in 80 Teilen Mineralöl (A) gelöst. Die Mischung wurde auf 70°C abgekühlt. Anschließend wurden 5 Teile der hochdispersen Kieselsäure (C) in kleinen Portionen derart eingemischt, daß eine homogene Mischung erhalten wird. Die Mischung wurde bei 1,5 kPa Vakuum entlüftet.

Beispiel 2

Es wurde eine Mischung, wie in Beispiel 1 beschrieben, hergestellt. Zusätzlich wurden 1,5 Teile des Oligoamids (E) zugegeben.

Beispiel 3

Es wurde, wie in Beispiel 1 beschrieben, eine Mischung aus 85,8 Teilen Mineralöl (A), 9,0 Teilen alpha-Olefincopolymer (B) und 5 Teilen hochdisperser Kieselsäure (C) hergestellt. Zu dieser Mischung wurden bei einer Temperatur zwischen 50°C und 70°C 0,2 Teile Mikrohohlkügelchen (D) eingearbeitet. Nach Entlüftung und Abkühlung auf RT wurde die Masse vor Prüfung 24 h bei Raumtemperatur gelagert, so daß "Einkapselung" der Mikrohohlkügelchen in das Kieselsäure-Netzwerk vollständig ablaufen kann.

Beispiel 4

Es wurde eine Mischung, wie in Beispiel 3 beschrieben, hergestellt. Zusätzlich wurden 1,5 Teile des Oligoamids (E) zugegeben.

Beispiel 5

Wie in Beispiel 3 beschrieben wurde eine Füllmasse folgender Zusammensetzung hergestellt:
85 Teile A
10 Teile B
3 Teile C
2 Teile D

Beispiel 6

Wie Beispiel 5. Zusätzlich 0,5 Teile E.

Alle erfindungsgemäßen Füllmassen erfüllen folgende Anforderungen:
Flammpunkt in °C nach DIN 51584: größer 200°C
Dielektrizitätskonstante bei 20°C nach DIN 53483: kleiner 2,3
Spez. Durchgangswiderstand bei 100°C in cm nach DIN 53482: größer $10^{10}$.

Die Dielektrizitätskonstanten im einzelnen:

| Beispiel | DK |
|----------|-----|
| 1 | 2,1 |
| 2 | 2,3 |
| 3 | 1,9 |
| 4 | 2,0 |
| 5 | 1,7 |
| 6 | 1,7 |

Die vorteilhaften rheologischen Eigenschaften der Massen lassen sich durch eine Fließkurve und Viskositätskurve zeigen. Alle Produkte haben bei 80°C eine ausgeprägte Fließgrenze und sind daher standfest.

Beispiel 1 zeigt ein seltenes rheologisches Verhalten. Die Masse ist, wie die anderen Beispiele, strukturviskos und plastisch, zeigt jedoch ein dilatanzähnliches Fließverhalten, d.h. bei Zunahme der Scherbelastung steigt die Viskosität, wenn auch nur leicht an. Die Masse fließt damit auch bei höheren Temperaturen und Einwirkung von Kräften nicht aus.

Vergleichsbeispiele:

Beispiel 7

Es wurde, wie in Beispiel 1 beschrieben, eine Füllmasse hergestellt aus:
77 Teile ataktischem Polypropylen (APP)
20 Teilen Mineralöl (A)
3 Teilen hochdisperser Kieselsäure (C)
APP gekennzeichnet durch:
Dichte: 0,86 g/cm$^3$
Schmelzviskosität bei 190°C, Rotationsviskosimeter: 6.500 mPa · s.

Beispiel 8

Es wurde eine Masse hergestellt aus:
7 Teilen Mikrohohlkügelchen (D)
94 Teilen Mineralöl (A)
Die Masse ist hochpastös.

Um die vorteilhaften Eigenschaften vor allem hinsichtlich Kälteflexibilität, Standfestigkeit und Mischungsstabilität zu zeigen, wurden die erfindungsgemäßen Massen der Beispiele 1–6 mit denen der Vergleichsbeispiele 7 und 8 verglichen.

Dabei wurden folgende Meßmethoden verwendet:

Methode I

Auslauftest (verschärfte Tropfpunktbestimmung)

Die Dichtstoffe/Füllmassen werden in beidseitig offene Glasröhrchen gefüllt von 8 mm Durchmesser und 1 cm Länge. Die Röhrchen werden auf ein Polyamidnetz (∅ 2 mm) und in einen genau regelbaren Thermoschrank gesetzt. Beginnend bei +40°C wird die Temperatur alle zwei Stunden um 10°C erhöht.

Angegeben wird die Temperatur bei der noch kein Auslaufen der Masse beobachtet wird (kein Tropfen).

Methode II

Ab- und Auslaufverhalten (Phasentrennung) von Füllmassen an senkrechten Glasflächen

Auf eine mit Aceton gereinigte Glasplatte von 20 x 20 cm Format wird ein halbkugelförmiges, 2 ml großes Häufchen aufgetragen.

Die Glasplatte wird in einem Umluftwärmeschrank senkrecht positioniert und zwar derart, daß die zu prüfenden Massen sich an der Prüfplatte oben befinden. Beurteilt wird das Ab- und Auslaufverhalten nach 16 h Verweilzeit bei 90°C. Unter Auslaufen wird verstanden, daß z.B. dünnflüssige Bestandteile aus den Massen austreten und als Nase unterhalb des Häufchens sichtbar werden.

Methode III

Tieftemperaturverhalten von Dichtstoffen/Füllmassen

Die zu prüfende Masse wird blasenfrei mittels einer Spritze in einen Silikonschlauch von 4 mm Durchmesser und 100 mm Länge gepreßt. Die Enden werden mittels Schlauchklemmen verschlossen und die Prüflinge bei –40°C 24 h gelagert. Nach dieser Lagerung wird der Prüfling spitzwinkelig geknickt und wieder gestreckt. Hierbei darf die Füllmasse nicht brechen oder Risse zeigen.

Methode IV

Temperaturwechseltest

Es wird wie bei Methode III beschrieben verfahren. Die mit der zu prüfenden Masse gefüllten Silikonröhrchen werden immer abwechselnd zunächst bei –40°C 16 h gelagert, dann geknickt und wieder gestreckt. Anschließend lagert man die Prüflinge 16 h bei RT und knickt und streckt erneut. Dann wieder Lagerung bei –40°C, knicken, strecken und so fort. Insgesamt 10 Zyklen. Es wird beurteilt, ob die Masse Risse zeigt und nach wieviel Zyklen die Risse auftreten.

Die Ergebnisse dieser Tests an den Beispielen der Erfindung sind in Tabelle 1 den Ergebnissen der Vergleichsbeispiele gegenübergestellt.

Tabelle 1

| Beispiele | Auslauftest Methode I | Ab- u. Auslaufverhalten Methode II | Tieftemperatur- verhalten Methode III | Temperaturwechseltest Methode IV |
|---|---|---|---|---|
| 1 | > 200°C | kein Laufen/ kein Ölausfluß | keine Risse | keine Risse |
| 2 | > 200°C | kein Laufen/ kein Ölausfluß | keine Risse | keine Risse |
| 3 | 90°C | kein Laufen/ leichter Ölausfluß | keine Risse | keine Risse |
| 4 | 100°C | kein Laufen/ kein Ölausfluß | keine Risse | keine Risse |
| 5 | 90°C | kein Laufen/ kein Ölausfluß | keine Risse | keine Risse |
| 6 | 90°C | kein Laufen/ kein Ölausfluß | keine Risse | keine Risse |
| Vergleichs- beispiele | | | | |
| 7 | 60°C | Laufen/ starker Ölausfluß | Rißbildung | Rißbildung nach 2- 5 Zyklen |
| 8 | 50°C | Laufen/ leichter Ölausfluß | keine Risse | Rißbildung nach 3 - 8 Zyklen |

EP 0 206 234 B1

**Patentansprüche**

1. Füllsubstanzen zum Längsdichten elektrischer und/oder optischer Kabel und Leisten auf Basis einer unpolaren, nicht wasser-mischbaren organischen Flüssigkomponente und gegebenenfalls von gasgefüllten Mikrohohlkörpern, die in einem bei Raumtemperatur flüssigen Kohlenwasserstoff gelöst
– ein organisches Verdickungsmittel auf Basis eines Polymeren und gewünschtenfalls
– ein Dispergiermittel
enthält, wobei in dieser Lösung dispergiert sind:
– hochdisperse Kieselsäure und gewünschtenfalls
– gasgefüllte Mikrohohlkörper eines Durchmessers von 5–500 μm,
dadurch gekennzeichnet, daß als organisches Verdickungsmittel 2 bis 25 Gew.-% eines Copolymeren aus Propen und Buten eingesetzt wird, welches auch noch Ethen enthalten kann, wobei die Volumenteile der dispergierten Stoffe 10 bis 80 Volumen-% betragen und die Füllsubstanz ein plastisches Fließverhalten zeigt.

2. Füllsubstanzen nach Anspruch 1, dadurch gekennzeichnet, daß sie besteht aus
– 65–90 Gew.-%, vorzugsweise 75–88 Gew.-% Mineralöl
– 2–25 Gew.-%, vorzugsweise 5–20 Gew.-% organisches Verdickungsmittel
– 2–10 Gew.-%, vorzugsweise 3–7 Gew.-% hochdisperse Kieselsäure
und gewünschtenfalls
– 0,2–10 Gew.-%, vorzugsweise 0,5–5 Gew.-% Mikrohohlkörper
– 0,1–5, vorzugsweise 0,2–2,5 Gew.-% Dispergiermittel.

3. Füllsubstanzen nach den Ansprüchen 1 und 2, dadurch gekennzeichnet, daß sie ein Mineralöl mit Stockpunkt kleiner 0°C und einer kinematischen Viskosität von 2–600 cSt ($mm^2 \cdot s^{-1}$), vorzugsweise 15–30 cSt, insbesondere 50–250 cSt enthält.

4. Füllsubstanzen nach den Ansprüchen 1–3, dadurch gekennzeichnet, daß sie als organisches Verdickungsmittel ein Copolymeres aus Propen, Buten und gewünschtenfalls Ethen enthält, dessen Schmelzviskosität vorzugsweise 30–70 Pas bei 190°C beträgt (Brookfield) und das einen Erweichungspunkt zwischen 90 und 160°C, insbesondere zwischen 100 und 120°C aufweist.

5. Füllsubstanzen nach den Ansprüchen 1 und 5, dadurch gekennzeichnet, daß als Polyolefin ein Copolymeres aus Propen und Buten eingesetzt wird, welches einen Propenanteil von 55–90 Gew.-%, insbesondere 60–85 Gew.-% enthält und gewünschtenfalls bis zu 20 Gew.-% Ethen enthält.

6. Füllsubstanzen nach den Ansprüchen 1–5, dadurch gekennzeichnet, daß die hochdisperse Kieselsäure eine Teilchengröße von 0,007 bis 0,05 microns und ein Schüttgewicht von 20–120 g/l, insbesondere 35–40 g/l aufweist.

7. Füllsubstanzen nach den Ansprüchen 1–6, dadurch gekennzeichnet, daß die Mikrohohlkörper kugelige Gestalt und einen Durchmesser von 10–150 μm, vorzugsweise 40–60 μm aufweisen.

8. Füllsubstanzen nach den Ansprüchen 1–7, dadurch gekennzeichnet, daß es sich bei den Mikrohohlkörpern um Glashohlkugeln, insbesondere Silikatglashohlkugeln handelt, die gewünschtenfalls gasgefüllt sein können.

9. Füllsubstanzen nach den Ansprüchen 1–7, dadurch gekennzeichnet, daß es sich bei den Mikrohohlkörpern um gasgefüllte Polymerkugeln, insbesondere um mit Isobutan gefüllte Hohlkugeln aus einem Vinylidenchlorid-acrylnitril-copolymeren, das gewünschtenfalls vernetzt sein kann, handelt.

10. Füllsubstanzen nach den Ansprüchen 1–9, dadurch gekennzeichnet, daß als Dispergiermittel Kondensate aus langkettigen Di- und/oder Tricarbonsäuren mit Aminen und/oder Hydroxyverbindungen der Funktionalität 2 oder 3 eingesetzt werden.

11. Füllsubstanzen nach den Ansprüchen 1–10, dadurch gekennzeichnet, daß als Dispergiermittel Oligoamide auf Basis langkettiger Dicarbonsäuren wie Dimerfettsäure und Di- oder Triaminen eingesetzt werden, welche eine Restaminzahl im Bereich von etwa 80 bis 400 aufweisen.

**Claims**

1. Filling materials for the longitudinal sealing of electrical and/or optical cables and terminal strips based on an apolar, water-immiscible organic liquid component and, optionally, gas-filled microhollow bodies which contain, in solution in a hydrocarbon liquid at room temperature,
- an organic thickener based on a polymer and, if desired,
- a dispersant
this solution containing
- pyrogenic silica and, if desired
- gas-filled micro-hollow bodies from 5 to 500 μm in diameter
in dispersed form,
characterized in that 2 to 25% by weight of a copolymer of propene and butene, which may also contain ethene, are used as the organic thickener, the percentages by volume of the dispersed substances being from 10 to 80% by volume and the filling material showing plastic flow behaviour.

2. Filling materials as claimed in claim 1, characterized in that it consists of
- from 65 to 90% by weight and preferably from 75 to 88% by weight mineral oil,

- from 2 to 25% by weight and preferably from 5 to 20% by weight organic thickener,
- from 2 to 10% by weight and preferably from 3 to 7% by weight highly disperse silica and, if desired,
- from 0.2 to 10% by weight and preferably from 0.5 to 5% by weight hollow micro-bodies,
- from 0.1 to 5% by weight and preferably from 0.2 to 2.5% by weight dispersant.

3. Filling materials as claimed in claims 1 and 2, characterized in that it contains a mineral oil having a pour point below 0°C and a kinematic viscosity of from 2 to 600 cSt (mm$^2$ · s$^{-1}$), preferably of from 15 to 30 cSt and more preferably of from 50 to 250 cSt.

4. Filling materials as claimed in claims 1 to 3, characterized in that they contain as organic thickener a copolymer propene, butene and, optionally, ethene, which has a melt viscosity (Brookfield) of preferably from 30 to 70 Pas at 190°C and a softening point of from 90 to 160°C and preferably of from 100 to 120°C.

5. Filling materials as claimed in claims 1 to 4, characterized in that the polyolefin used is a copolymer of propene and butene which contains from 55 to 90% by weight and more especially from 60 to 85% by weight propene and which, if desired, contains up to 20% by weight ethene.

6. Filling materials as claimed in claims 1 to 5, characterized in that the highly disperse silica has a particle size of from 0.007 to 0.05 micron and a powder density of from 20 to 120 g/l and more especially from 35 to 40 g/l.

7. Filling materials as claimed in claims 1 to 6, characterized in that the hollow micro-bodies are spherical and have a diameter of from 10 to 150 μm and preferably of from 40 to 60 μm.

8. Filling materials as claimed in claims 1 to 7, characterized in that the hollow micro-bodies are hollow glass beads, more especially silicate hollow glass beads, which if desired may be gas-filled.

9. Filling materials as claimed in claims 1 to 7, characterized in that the hollow micro-bodies are gas-filled polymer beads, more especially isobutane-filled hollow beads of a vinylidene chloride/acrylonitrile copolymer which, if desired, may be crosslinked.

10. Filling materials as claimed in claims 1 to 9, characterized in that the dispersants used are condensates of long-chain di- and/or tri-carboxylic acids with amines and/or hydroxy compounds having a functionality of 2 or 3.

11. Filling materials as claimed in claims 1 to 10, characterized in that the dispersants used are oligoamides based on long-chain dicarboxylic acids, such as dimer fatty acid, and di- or triamines which have a residual amine value of from about 80 to 400.

## Revendications

1. Substances de remplissage pour la garniture longitudinale de câbles électriques et/ou optiques et de baguettes à base d'un composant liquide organique non-miscible à l'eau et non polaire et, le cas échéant, de microcorpuscules creux remplis de gaz, contenant, dissouts dans un hydrocarbure liquide à température ambiante:
   - un agent épaississant organique à base d'un polymère et le cas échéant,
   - un agent dispersant,
   et
   - de l'acide silicique hautement dispersé et, le cas échéant,
   - des microcorpuscules creux remplis de gaz ayant un diamètre de 5 à 500 μm,
   étant dispersées dans la solution,
   substances caractérisées en ce que l'on met en oeuvre en tant qu'agent épaississant organique, 2 à 25 % en poids d'un copolymère de propène et de butène, qui peut également contenir encore de l'éthylène, les parties en volume des substances dispersées s'élevant à 10 à 80 % en volume et la substance de remplissage manifestant un comportement à écoulement plastique.

2. Substances de remplissage selon la revendication 1, caractérisées en ce qu'elles se composent de:
   - 65 à 90 % en poids - de préférence 75-88 % en poids d'huile minérale
   - 2 à 25 % en poids - de préférence de 5 à 20 % en poids d'un agent épaississant organique,
   - 2 à 10 % en poids - de préférence 3 à 7 % en poids d'acide silicique hautement dispersé,
   et, si désiré:
   - 0,2 à 10 % en poids - de préférence de 0,5 à 5 % en poids de microcorpuscules creux,
   - 0,1 à 5 % - de préférence 0,2 à 2,5 % en poids d'un agent dispersant.

3. Substances de remplissage selon les revendications 1 et 2, caractérisées en ce qu'elles renferment une huile minérale ayant un point de figeage inférieur à 0°C, et une viscosité cinématique de 2 à 600 cSt (mm$^2$ · S$^{-1}$) - de préférence de 15 à 30 cSt et en particulier de 50 à 250 cSt.

4. Substances de remplissage selon les revendications 1 à 3, caractérisées en ce qu'elles renferment comme agent épaississant organique un copolymère à base de propène, de butène et le cas échéant d'éthylène, dont la viscosité à la fusion s'élève de préférence à 30-70 Pas à 190°C (Brookfield) et qui possède un point de ramollissement compris entre 90 et 160°C - de préférence entre 100 et 120°C.

5. Substances de remplissage selon les revendications 1 à 4, caractérisées en ce que l'on met en oeuvre comme polyoléfine un copolymère de propène et de butène qui contient un pourcentage de propène de 55 à 90 % en poids, en particulier de 60 à 85 % en poids et, si désiré, jusqu'à 20 % en poids d'éthylène.

6. Substances de remplissage selon les revendications 1 à 5, caractérisées en ce que l'acide silicique hautement dispersé possède une taille de particules de 0,007 à 0,05 microns et une densité apparente de 20 à 120 g/l - en particulier de 35 à 40 g/l.

7. Substances de remplissage selon les revendications 1 à 6, caractérisées en ce que les microcorpuscules creux présentent un aspect sphérique et un diamètre de 10 à 150 μm, de préférence de 40 à 60 μm.

8. Substances de remplissage selon les revendications 1 à 7, caractérisées en ce que les microcorpuscules creux sont constitués par des sphères de verre creuses, en particulier de sphères en verre au silicate creuses qui peuvent être, si désiré, remplies de gaz.

9. Substances de remplissage selon les revendications 1 à 7, caractérisées en ce que les microcorpuscules creux sont constitués par des billes polymères remplies de gaz, en particulier de billes creuses remplies d'isobutane, en un copolymère chlorure de vinylidène/acrylonitrile qui peut, si désiré, être réticulé.

10. Substances de remplissage selon les revendications 1 à 9, caractérisées en ce qu'en tant qu'agent dispersant, on met en oeuvre des produits de condensation d'acides di- et/ou tricarboxyliques à longue chaîne avec des amines et/ou des composés hydroxylés de fonctionnalité 2 ou 3.

11. Substances de remplissage selon les revendications 1 à 10, caractérisées en ce qu'en tant qu'agent dispersant, on met en oeuvre des oligoamides à base d'acides dicarboxyliques à longue chaîne comme des acides gras dimères et des di- ou triamines, qui possèdent un indice résiduel d'amine environ compris entre 80 et 400.